(19) Europäisches Patentamt / European Patent Office / Office européen des brevets

(11) **EP 3 654 013 B1**

(12) **EUROPEAN PATENT SPECIFICATION**

(45) Date of publication and mention
of the grant of the patent:
**03.08.2022 Bulletin 2022/31**

(21) Application number: **19194194.7**

(22) Date of filing: **28.08.2019**

(51) International Patent Classification (IPC):
**G01N 15/02** *(2006.01)* **G01N 15/06** *(2006.01)*
**G01N 15/00** *(2006.01)*

(52) Cooperative Patent Classification (CPC):
**G01N 15/065; G01N 15/0266;** G01N 2015/0046

(54) **CORRECTION METHOD OF PARTICLE SIZE DISTRIBUTION MEASURING APPARATUS, CALIBRATION METHOD OF PARTICLE SIZE DISTRIBUTION MEASURING APPARATUS, PARTICLE SIZE DISTRIBUTION MEASURING APPARATUS, AND GAS ANALYSIS SYSTEM**

KORREKTURVERFAHREN FÜR TEILCHENGRÖSSENVERTEILUNGSMESSVORRICHTUNG, KALIBRIERVERFAHREN EINER TEILCHENGRÖSSENVERTEILUNGSMESSVORRICHTUNG, TEILCHENGRÖSSENVERTEILUNGSMESSVORRICHTUNG UND GASANALYSESYSTEM

PROCÉDÉ DE CORRECTION D'APPAREIL DE MESURE DE LA DISTRIBUTION DE TAILLE DE PARTICULES, PROCÉDÉ D'ÉTALONNAGE D'APPAREIL DE MESURE DE LA DISTRIBUTION DE TAILLE DE PARTICULES, APPAREIL DE MESURE DE LA DISTRIBUTION DE TAILLE DE PARTICULES ET SYSTÈME D'ANALYSE DE GAZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.11.2018 JP 2018213727**

(43) Date of publication of application:
**20.05.2020 Bulletin 2020/21**

(73) Proprietor: **HORIBA, Ltd.**
**Kyoto 601-8510 (JP)**

(72) Inventor: **OTSUKI, Yoshinori**
**Kyoto, 601-8510 (JP)**

(74) Representative: **Müller Hoffmann & Partner**
**Patentanwälte mbB**
**St.-Martin-Strasse 58**
**81541 München (DE)**

(56) References cited:
**US-A1- 2013 060 509**

- **A. WIEDENSOHLER ET AL: "Mobility particle size spectrometers: harmonization of technical standards and data structure to facilitate high quality long-term observations of atmospheric particle number size distributions", ATMOSPHERIC MEASUREMENT TECHNIQUES, vol. 5, no. 3, 29 March 2012 (2012-03-29), pages 657-685, XP055462715, DOI: 10.5194/amt-5-657-2012**

**Description**

Technical Field

The present invention relates to a correction method of a particle size distribution measuring apparatus, a calibration method of a particle size distribution measuring apparatus, a particle size distribution measuring apparatus, and a gas analysis system.

Background Art

Conventionally, a condensation particle counter (CPC: Condensation Particle Counter) has been used for counting particles contained in target gas to be measured such as exhaust gas. The condensation particle counter passes particles in a supersaturated alcohol atmosphere to grow them to have large sizes, and then discharges them through a slit and counts the discharged particles with a laser beam.

On the other hand, it is also performed to measure the particle size distribution of particles contained in target gas to be measured such as exhaust gas, and a particle size distribution measuring apparatus is used for measuring a particle size distribution (for example, Patent Literature 1). That is, the measurement of the particle size distribution is performed in a manner such that, the particles contained in the target gas to be measured is classified by an electrostatic classifier, and then the classified particles are detected to thereby obtain a particle size distribution which represents a relationship between the particle sizes and a particle number concentration (number concentration). Note here that the particle number concentration (number concentration) is, for example, the number of particles contained per unit volume.

Citation List

Patent Literature

Patent Literature 1: Japanese Unexamined Patent Application Publication No. 2005-214931

Further technological background can be found in US 2013/0060509 A1 and in A. Wiedensohler et al: "Mobility particle size spectrometers: harmonization of technical standards and data structure to facilitate high quality long-term observations of atmospheric particle number size distributions", Atmospheric measurement techniques, Vol. 5, No. 3, 1 January 2020, pages 657-685.

Summary of Invention

Technical Problem

By the way, the above-mentioned condensation particle counter has its calibration method and traceability established, and its reliability regarding its measurement accuracy is ensured. On the other hand, in the particle size distribution measuring apparatus which measures particle size distribution using an electrostatic classifier, its calibration method and traceability have not been established, and reliability regarding its measurement accuracy has not been ensured.

Therefore, the present invention has been made to solve the above-mentioned problems, and its main object is to improve the reliability of the measurement accuracy of the particle size distribution measuring apparatus.

Solution to Problem

That is, a correction method of a particle size distribution measuring apparatus according to the present invention is for correcting a particle size distribution measurement result of the particle size distribution measuring apparatus adapted to measure a particle size distribution of particles contained in target gas to be measured, wherein the particle size distribution measurement result is corrected using a correction coefficient that is calculated based on a particle number measurement result of measuring the number of particles contained in the target gas to be measured using a condensation particle counter and a value indicating a counting efficiency of the condensation particle counter, as parameters.

According to such a method, since the particle size distribution measurement result is corrected using the condensation particle counter having a calibration method and traceability established, the reliability regarding measurement accuracy of the particle size distribution measuring apparatus can be improved.

In this method, the correction coefficient is calculated using the particle number measurement result of the condensation particle counter, and the particle number concentration for each size in the particle size distribution measurement result before correction, and a value indicating the counting efficiency of the condensation particle counter for each corresponding size, as the parameters.

Specifically, the correction coefficient is obtained by weighting the particle number concentration for each size in the particle size distribution measurement result before correction using a value indicating the counting efficiency of the condensation particle counter for each corresponding size, and based on a relationship (for example, a ratio) between an integrated particle number concentration obtained by integrating the respectively weighted particle number concentration and the particle number concentration obtained by the condensation particle counter.

Furthermore, a calibration method of a particle size distribution measuring apparatus according to the present invention is for calibrating a particle size distribution measuring apparatus adapted to measure a particle size distribution of particles contained in target gas to be measured, wherein the particle size distribution measuring apparatus is calibrated using the correction coefficient that is calculated based on a particle number measurement result of measuring the number of particles contained in the target gas to be measured using a condensation particle counter and a value indicating a counting efficiency of the condensation particle counter, as parameters.

According to such a method, since the particle size distribution measuring apparatus is calibrated using the condensation particle counter having a calibration method and traceability established, the reliability regarding measurement accuracy of the particle size distribution measuring apparatus can be improved.

Furthermore, a particle size distribution measuring apparatus according to the present invention is adapted to measure a particle size distribution of particles contained in target gas to be measured, and the particle size distribution measuring apparatus includes: a reception part for receiving a particle number measurement result obtained by measuring the number of particles contained in the target gas to be measured using a condensation particle counter; and a correction part for correcting the particle size distribution calculated using the correction coefficient that is calculated using the particle number measurement result and a value indicating a counting efficiency of the condensation particle counter, as parameters.

According to such a configuration, since the particle size distribution measurement result can be corrected using the condensation particle counter having a calibration method and traceability established, the reliability regarding measurement accuracy of the particle size distribution measuring apparatus can be improved.

In the above configuration, it is preferable that the particle size distribution measuring apparatus further includes a calculation part that calculates the number, surface area, volume, or mass concentration of the particles using the particle size distribution corrected by the correction part.

Furthermore, a gas analysis system according to the present invention includes: a condensation particle counter for measuring the number of particles contained in target gas to be measured; a particle size distribution measuring apparatus that is adapted to measure a particle size distribution of particles contained in the target gas to be measured; and a correction part for correcting a particle size distribution measurement result obtained by the particle size distribution measuring apparatus using a correction coefficient that is calculated using the particle number measurement result measured by the condensation particle counter and a value indicating a counting efficiency of the condensation particle counter, as parameters.

Advantageous Effects of Invention

According to the present invention described above, it is possible to improve the reliability of the measurement accuracy of the particle size distribution measuring apparatus.

Brief Description of Drawings

FIG. 1 is a diagram schematically showing a configuration of a gas analysis system according to an embodiment of the present invention; and
FIG. 2 is a schematic view showing a functional configuration of an arithmetic unit in a particle size distribution analyzer of the same embodiment.

Description of Embodiments

In the following, a gas analysis system according to an embodiment of the present invention will be described with reference to the drawings.

<Apparatus Configuration>

A gas analysis system 100 of the present embodiment is adapted to measure the number of particulate matters (PN: Particulate Number, referred to as "number of particles", hereinafter) contained in exhaust gas and a particle size distribution thereof. The exhaust gas is discharged from an exhaust pipe connected to an internal combustion engine, and after it is diluted by a constant volume sampler (CVS) and the like, a part of the exhaust gas is collected and introduced into the gas analysis system 100. Here, instead of using the CVS, the exhaust gas may be also diluted with dilution gas, or it may be undiluted.

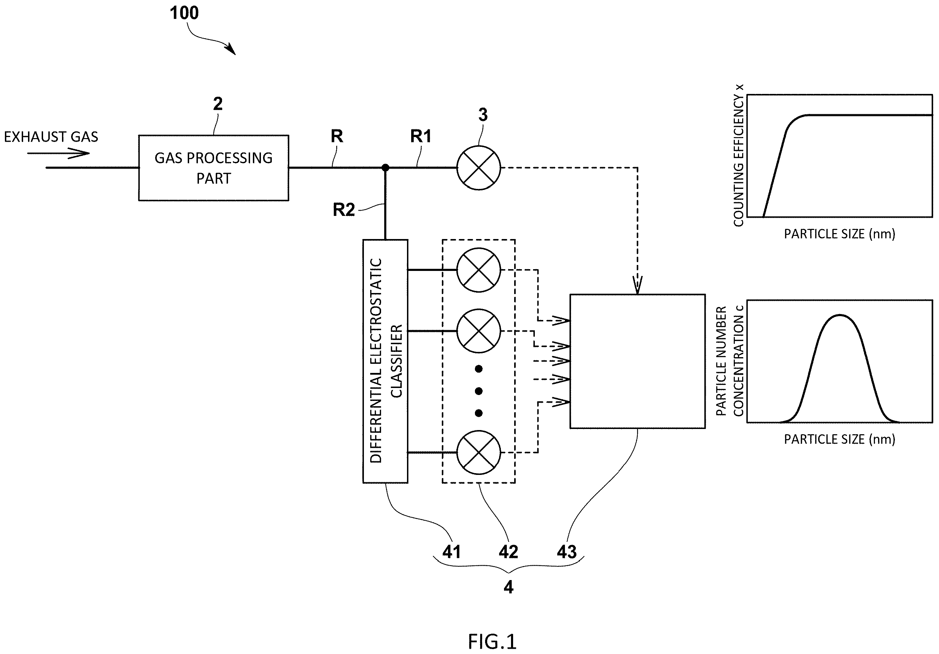

Specifically, as shown in FIG. 1, the gas analysis system 100 includes: an exhaust gas processing part 2 that performs a predetermined process on the exhaust gas; a condensation particle counter 3 (CPC) for counting the number of particles contained in the exhaust gas that has passed through the exhaust gas processing part 2; and a particle size distribution measuring apparatus 4 for measuring a particle size distribution of the particles contained in the exhaust gas that has passed through the exhaust gas processing part 2. In the present embodiment, a flow path R connected to the exhaust gas processing part 2 is branched midway, and one branch flow path R1 is connected to the condensation particle counter 3, and the other branch flow path R2 is connected to the particle size distribution measuring apparatus 4.

The exhaust gas processing part 2 is a volatile particle remover (VPR) for removing volatile particles including sulfuric acid mist and SOF (Soluble Organic Fraction) contained in the exhaust gas. The volatile particle remover has, for example, a heating diluter, an evaporation tube, and a cooling diluter.

The condensation particle counter 3 is adapted to pass the particles in a supersaturated alcohol (such as butanol) atmosphere to grow each of them to have a large size, and then the particles are discharged them through a slit so that the number of the discharged particles are counted with a laser beam. Note here that the condensation particle counter is a measuring device having its calibration method and traceability established.

The particle size distribution measuring apparatus 4 is adapted to classify the particles contained in the exhaust gas according to each of the sizes thereof, detect the particles for each of the classified sizes, and calculate the particle size distribution.

Specifically, the particle size distribution measuring apparatus 4 includes: a differential electrostatic classifier 41 (also, referred to as "differential mobility analyzer (DMA), hereinafter); a multistage electrometer 42 that detects the particles for each of the sizes classified by the differential electrostatic classifier 41.

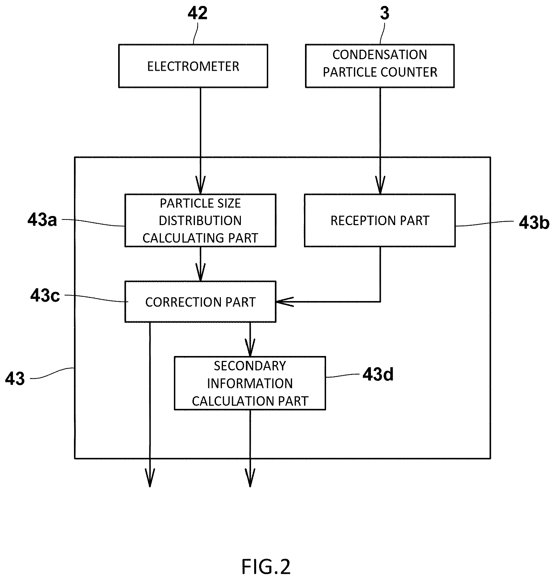

Further, as shown in FIG. 2, the arithmetic unit 43 of the particle size distribution measuring apparatus 4 includes a particle size distribution calculating part 43a that continuously calculates information of the particle size distribution by acquiring detection signals of the multistage electrometer 42. Here, the particle size distribution indicates a relationship between the particle sizes and the particle number concentration (number concentration). The particle number concentration (number concentration) is, for example, the number of particles contained in a unit volume. The arithmetic unit 43 is a dedicated or general-purpose computer including a CPU, a memory, an input/output interface, an AD converter, and the like. The arithmetic unit 43 is configured such that, based on a program stored in the memory, the CPU and the other peripheral equipment cooperate to thereby perform the arithmetic operation of the particle size distribution measurement.

Furthermore, the arithmetic unit 43 of the present embodiment includes: a reception part 43b that receives a particle number measurement result of the condensation particle counter 3 and counting efficiency information of the condensation particle counter 3; and a correction part 43c that corrects the particle size distribution calculated using a correction coefficient A calculated using the particle number measurement result and the counting efficiency of the condensation particle counter 3 as parameters. In addition, the arithmetic unit 43 further includes a secondary information calculation part 43d that calculates secondary information such as the number of particles, a surface area (i.e., a total amount of surface areas of particles contained per unit volume), a volume or mass concentration (mass of particles contained per unit volume), using the particle size distribution corrected by the correction part 43c.

Here, a correction method performed by the correction part 43c will be described in detail.

The correction part 43c calculates the correction coefficient A using the particle number measurement result (also, referred to as "particle number data" hereinafter) of the condensation particle counter 3 and the particle number concentration for each size in the particle size distribution measurement result before correction (also, referred to as "particle size distribution data" hereinafter) and the counting efficiency of the condensation particle counter 3 for each size, as parameters. Note that the correction part 43c may calculate the correction coefficient A in a predetermined particle size range (for example, in a measurement range of the condensation particle counter 3).

Specifically, the correction part 43c obtains $c_1 \times x_1$, $c_2 \times x_2$, $c_3 \times x_3$, .... $c_{n-1} \times x_{n-1}$, $c_n \times x_n$ by weighting the particle number concentrations ($c_1$ to $c_n$) for each size in the particle size distribution data before correction (see Graph "particle size/particle number concentration" shown in the middle right of FIG. 1) using the counting efficiencies $x_1$ to $x_n$ of the condensation particle counter 3 for corresponding each size (see Graph "particle size/counting efficiency" shown in the upper right of FIG. 1).

Then, the correction part 43c obtains the correction coefficient A by a ratio ($C_{CPC}/\Sigma c_k \times x_k$) between an integration

particle number concentration ($c_1 \times x_1 + ... + c_{n-1} \times x_{n-1} + c_n \times x_n$ (= $\Sigma c_k \times x_k$)) obtained by integrating the respective weighted particle number concentrations ($c_1 \times x_1$ to $c_n \times x_n$) and the particle number concentration ($C_{CPC}$) obtained from the particle number data of the condensation particle counter 3, in the following equation. Note here that, although an example using the counting efficiency per se of the condensation particle counter 3 is shown, there may be an example of performing arithmetic operation from the counting efficiency or may be an example showing the same tendency according to the particle sizes as the counting efficiency.

[Equation 1]

$$\text{correction coefficient A} = \frac{C_{CPC}}{\sum C_k \times x_k}$$

Note that the calculation of the correction coefficient A may be performed periodically at predetermined time intervals, or a step of calculating the correction coefficient A may be incorporated in a test schedule.

Then, the correction part 43c corrects the particle size distribution data using the particle size distribution data obtained by the particle size distribution calculating part 43a and the calculated correction coefficient A. That is, the correction part 43c calculates the particle size distribution data after correction by multiplying the particle number concentrations ($c_1$ to $c_n$) for each size in the particle size distribution data before correction by the correction coefficient A.

The particle size distribution data after correction corrected in this manner is outputted to, for example, a display (not shown) of the arithmetic unit 43 and is used for calculating the secondary information such as the number, surface area, volume or mass concentration of the particles by the secondary information calculation part 43d. The calculated secondary information is also outputted to the display. In addition, the particle size distribution data after correction and the secondary information may be stored, for example, in the memory of the arithmetic unit 43.

<Effect of the present embodiment>

According to the gas analysis system 100 of the present embodiment, since the particle size distribution measurement result is corrected using the condensation particle counter 3 having the calibration method and traceability established, it is possible to improve reliability for the measurement accuracy of the particle size distribution measuring apparatus 4.

In addition, by calculating the number, surface area, volume, mass concentration, and the like of the particles using the corrected particle size distribution, the measurement accuracy thereof can also be improved.

<Other Variations>

Note that the present invention is not limited to the above embodiment.

For example, in the above embodiment, although the particle size distribution measuring apparatus is configured to correct the particle size distribution, the particle size distribution measuring apparatus may be configured to be calibrated using the particle number data of the condensation particle counter. Also, in this calibration, the exhaust gas is allowed to flow both into the condensation particle counter and the particle size distribution measuring apparatus to thereby obtain the correction coefficient A in the same manner as in the above embodiment. Then, the particle size distribution measuring apparatus is calibrated using this correction coefficient A.

In the above embodiment, although the correction part calculates the correction coefficient A using the particle number concentration, the correction coefficient A may be calculated using the number of particles.

In addition, in the case where the exhaust gas processing part 2 is configured to have a diluter in a rear stage thereof, the diluter may be used in common with a configuration in which sheath gas is allowed to flow into the electrostatic classifier. Thus, it is possible to prevent the exhaust gas from being excessively diluted, and the particle size distribution measurement can be achieved with high sensitivity.

In the above embodiment, although the correction part of the particle size distribution measuring apparatus is configured to correct the particle size distribution measurement result, it may be configured to have another correction part for correcting the particle size distribution measurement result separately from the particle size distribution measuring apparatus.

Although it is desirable that the calculation of the correction coefficient A may be performed periodically such as every time the particle size distribution measurement is performed, it may be configured to have no condensation particle counter connected so long as it is configured that the correction coefficient A calculated at a predetermined timing (for example, at a time of product shipment or calibration) is previously stored in the memory of the arithmetic unit 43 and correct each particle size distribution measurement result using the stored correction coefficient A.

Other than the above embodiments, the particle size distribution measuring apparatus may be a laser diffraction/ scattering type particle size distribution measuring apparatus which detects diffracted/ scattered light obtained by irradiating laser beams, and measures the particle size distribution, or may be a particle size image analysis type particle size distribution measuring apparatus which measures the particle size distribution by analyzing the image obtained by a camera.

Furthermore, the gas analysis system may be configured to have no gas processing part.

Reference Signs List

| | |
|---|---|
| 100 | Gas analyzer |
| 2 | Gas processing part |
| 3 | Condensation particle counter |
| 4 | Particle size distribution measuring apparatus |
| 41 | Differential electrostatic classifier |
| 42 | Electrometer |
| 43 | Arithmetic unit |
| 43a | Particle size distribution calculation part |
| 43b | Reception part |
| 43c | Correction part |
| 43d | Secondary information calculation part |

**Claims**

1. A method of correcting a particle size distribution measurement result of a particle size distribution measuring apparatus (4), or calibrating the particle size distribution measuring apparatus (4) that is adapted to measure a particle size distribution of particles contained in target gas to be measured, the method comprising:

   correcting the particle size distribution measurement result or calibrating the particle size distribution measuring apparatus (4), using a correction coefficient that is calculated based on the particle number measurement result of measuring the number of particles contained in the target gas to be measured using a condensation particle counter (3) and a value indicating a counting efficiency of the condensation particle counter (3), as parameters, **characterized in that**
   the correction coefficient is obtained by weighting the particle number concentration for each size in the particle size distribution measurement result before correction using a value indicating the counting efficiency of the condensation particle counter (3) for each corresponding size, and based on a relationship between an integrated particle number concentration obtained by integrating the respectively weighted particle number concentration and the particle number concentration obtained by the condensation particle counter (3).

2. The method according to claim 1, wherein the correction coefficient is calculated using the particle number measurement result of the condensation particle counter (3), and the particle number concentration for each size in the particle size distribution measurement result before correction, and a value indicating the counting efficiency of the condensation particle counter (3) for each corresponding size, as the parameters.

3. The method according to any one of claims 1 to 2, wherein the correction coefficient is obtained by a following equation,

[Equation 2]

$$\text{correction coefficient } A = \frac{C_{CPC}}{\sum C_k \times x_k}$$

wherein $C_{CPC}$ is the particle number concentration obtained by the condensation particle counter (3), and $\sum c_k \times x_k$ is an integration particle number concentration obtained by weighting the particle number concentrations ($c_1$ to $c_n$) for each size in the particle size distribution measurement result before correction using a value ($x_1$ to $x_n$) indicating

the counting efficiencies ($x_1$ to $x_n$) of the condensation particle counter (3) for corresponding each size and integrating the respective weighted particle number concentrations ($c_1 \times x_1$ to $c_n \times x_n$).

4. A particle size distribution measuring apparatus (4) adapted to measure a particle size distribution of particles contained in target gas to be measured, comprising:

a reception part (43b) for receiving a particle number measurement result obtained by measuring the number of particles contained in the target gas to be measured using a condensation particle counter (3), comprising

a correction part (43c) for correcting the particle size distribution calculated or for calibrating the particle size distribution measuring apparatus (4), using a correction coefficient that is calculated based on the particle number measurement result and a value indicating a counting efficiency of the condensation particle counter (3), as parameters, **characterized in that**

the correction coefficient is obtained by weighting the particle number concentration for each size in the particle size distribution measurement result before correction using a value indicating the counting efficiency of the condensation particle counter (3) for each corresponding size, and based on a relationship between an integrated particle number concentration obtained by integrating the respectively weighted particle number concentration and the particle number concentration obtained by the condensation particle counter (3).

5. The particle size distribution measuring apparatus (4) according to claim 4, further comprising a calculation part (43d) that calculates the number, surface area, volume, or mass concentration of the particles using the particle size distribution corrected by the correction part (43c).

6. A gas analysis system (100) comprising:

a condensation particle counter (3) for measuring the number of particles contained in target gas to be measured; and

the particle size distribution measuring apparatus (4) according to claim 4 or 5.

**Patentansprüche**

1. Verfahren zum Korrigieren eines Ergebnisses einer Messung einer Partikelgrößenverteilung einer Partikelgrößenverteilungsmessvorrichtung (4) oder Kalibrieren der Partikelgrößenverteilungsmessvorrichtung (4), die dafür geeignet ist, eine Partikelgrößenverteilung von in einem zu messenden Zielgas enthaltenen Partikeln zu messen, wobei das Verfahren aufweist:

ein Korrigieren des Ergebnisses einer Messung einer Partikelgrößenverteilung oder ein Kalibrieren der Partikelgrößenverteilungsmessvorrichtung (4) unter Verwendung eines Korrekturkoeffizienten, der basierend auf dem Ergebnis einer Partikelzahlmessung zum Messen der Zahl von im zu messenden Zielgas enthaltenen Partikeln unter Verwendung eines Kondensationspartikelzählers (3) und einem eine Zähleffizienz des Kondensationspartikelzählers (3) angebenden Wert als Parameter berechnet wird,

**dadurch gekennzeichnet, dass**

der Korrekturkoeffizient durch Gewichten der Partikelzahlkonzentration für jede Größe im Ergebnis einer Messung einer Partikelgrößenverteilung vor einer Korrektur unter Verwendung eines die Zähleffizienz des Kondensationspartikelzählers (3) für jede entsprechende Größe angebenden Werts und basierend auf einer Beziehung zwischen einer integrierten Partikelzahlkonzentration, die durch Integrieren der jeweils gewichteten Partikelzahlkonzentration erhalten wird, und der durch den Kondensationspartikelzähler (3) erhaltenen Partikelzahlkonzentration erhalten wird.

2. Verfahren nach Anspruch 1, wobei der Korrekturkoeffizient unter Verwendung des Ergebnisses einer Partikelzahlmessung des Kondensationspartikelzählers (3) und der Partikelzahlkonzentration für jede Größe im Ergebnis einer Messung einer Partikelgrößenverteilung vor einer Korrektur und eines die Zähleffizienz des Kondensationspartikelzählers (3) für jede entsprechende Größe angebenden Werts als Parameter berechnet wird.

3. Verfahren nach einem der Ansprüche 1 bis 2, wobei der Korrekturkoeffizient durch folgende Gleichung

[Gleichung 2]

$$\text{Korrekturkoeffizient A} = \frac{C_{CPC}}{\sum C_k \times x_k}$$

erhalten wird,

wobei $C_{CPC}$ die durch den Kondensationspartikelzähler (3) erhaltene Partikelzahlkonzentration ist und $Ec_k \times x_k$ eine integrierte Partikelzahlkonzentration ist, die erhalten wird, indem die Partikelzahlkonzentrationen ($c_1$ bis $c_n$) für jede Größe im Ergebnis einer Messung der Partikelgrößenverteilung vor einer Korrektur unter Verwendung eines Werts ($x_1$ bis $x_n$), der die Zähleffizienzen ($x_1$ bis $x_n$) des Kondensationspartikelzählers (3) für jede entsprechende Größe angibt, gewichtet und die jeweiligen gewichteten Partikelzahlkonzentrationen ($c_1 \times x_1$ bis $c_n \times x_n$) integriert werden.

4. Partikelgrößenverteilungsmessvorrichtung (4), die dafür geeignet ist, eine Partikelgrößenverteilung von in einem zu messenden Zielgas enthaltenen Partikeln zu messen, aufweisend:

einen Empfangsteil (43b), um ein Ergebnis einer Partikelzahlmessung zu empfangen, das erhalten wird, indem die Zahl von in einem zu messenden Zielgas enthaltenen Partikeln unter Verwendung eines Kondensationspartikelzählers (3) gemessen wird,

aufweisend einen Korrekturteil (43c), um die berechnete Partikelgrößenverteilung zu korrigieren oder die Partikelgrößenverteilungsmessvorrichtung (4) zu kalibrieren, unter Verwendung eines Korrekturkoeffizienten, der basierend auf dem Ergebnis einer Partikelzahlmessung und einem eine Zähleffizienz des Kondensationspartikelzählers (3) angebenden Wert als Parameter berechnet wird,

**dadurch gekennzeichnet, dass**

der Korrekturkoeffizient durch Gewichten der Partikelzahlkonzentration für jede Größe im Ergebnis einer Messung einer Partikelgrößenverteilung vor einer Korrektur unter Verwendung eines die Zähleffizienz des Kondensationspartikelzählers (3) für jede entsprechende Größe angebenden Werts und basierend auf einer Beziehung zwischen einer integrierten Partikelzahlkonzentration, die durch Integrieren der jeweils gewichteten Partikelzahlkonzentration erhalten wird, und der durch den Kondensationspartikelzähler (3) erhaltenen Partikelzahlkonzentration erhalten wird.

5. Partikelgrößenverteilungsmessvorrichtung (4) nach Anspruch 4, ferner aufweisend einen Berechnungsteil (43d), der die Zahl, die Oberfläche, das Volumen oder die Massenkonzentration der Partikel unter Verwendung der durch den Korrekturteil (43c) korrigierten Partikelgrößenverteilung berechnet.

6. Gasanalysesystem (100), aufweisend:

einen Kondensationspartikelzähler (3) zum Messen der Zahl von in einem zu messenden Zielgas enthaltenen Partikeln; und

die Partikelgrößenverteilungsmessvorrichtung (4) nach Anspruch 4 oder 5.

**Revendications**

1. Procédé de correction d'un résultat de mesure de distribution de taille de particules d'un appareil de mesure de distribution de taille de particules (4), ou d'étalonnage de l'appareil de mesure de distribution de taille de particules qui est adapté pour mesurer une distribution de taille de particules contenues dans un gaz cible à mesurer, le procédé comprenant :

corriger le résultat de mesure de distribution de taille de particules ou étalonner l'appareil de mesure de distribution de taille de particules (4), en utilisant un coefficient de correction qui est calculé sur la base du résultat de mesure de nombre de particules de la mesure du nombre de particules contenues dans le gaz cible à mesurer en utilisant un compteur de particules de condensation (3) et une valeur indiquant une efficacité de comptage du compteur de particules de condensation (3), comme paramètres, **caractérisé en ce que**

le coefficient de correction est obtenu par pondération de la concentration de nombre de particules pour chaque taille dans le résultat de mesure de distribution de taille de particules avant correction en utilisant une valeur indiquant l'efficacité de comptage du compteur de particules de condensation (3) pour chaque taille correspondante, et sur la base d'une relation entre une concentration de nombre de particules intégrée obtenue par intégration de la concentration de nombre de particules pondérée respectivement et de la concentration de nombre de particules obtenue par le compteur de particules de condensation (3).

2. Procédé selon la revendication 1, dans lequel le coefficient de correction est calculé en utilisant le résultat de mesure de nombre de particules du compteur de particules de condensation (3), et la concentration de nombre de particules pour chaque taille dans le résultat de mesure de distribution de taille de particules avant correction, et une valeur indiquant l'efficacité de comptage du compteur de particules de condensation (3) pour chaque taille correspondante, comme paramètres.

3. Procédé selon l'une quelconque des revendications 1 à 2, dans lequel le coefficient de correction est obtenu par une équation suivante,

[Equation 2]

$$\text{correction coefficient A} = \frac{C_{CPC}}{\sum C_k \times x_k}$$

dans laquelle $C_{CPC}$ est la concentration de nombre de particules obtenu par le compteur de particules de condensation (3), et $\Sigma c_k \times x_k$ est une concentration de nombre de particules d'intégration obtenue par pondération des concentrations de nombre de particules ($c_1$ à $c_n$) pour chaque résultat de mesure de distribution de taille de particules avant correction en utilisant une valeur ($x_1$ à $x_n$) indiquant les efficacités de comptage ($x_1$ à $x_n$) du compteur de particules de condensation (3) pour chaque taille correspondante et en intégrant les concentrations de nombre de particules pondérées respectives ($c_1 \times x_1$ à $c_n \times x_n$).

4. Appareil de mesure de distribution de taille de particules (4) adapté pour mesurer une distribution de taille de particules contenues dans un gaz cible à mesurer, comprenant :

une partie de réception (43b) pour recevoir un résultat de mesure de nombre de particules obtenu en mesurant le nombre de particules contenues dans le gaz cible à mesurer en utilisant un compteur de particules de condensation (3), comprenant une partie de correction (43c) pour corriger la distribution de taille de particules calculée ou pour étalonner l'appareil de mesure de distribution de taille de particules (4), en utilisant un coefficient de correction qui est calculé sur la base du résultat de mesure de nombre de particules et une valeur indiquant une efficacité de comptage du compteur de particules de condensation (3), comme paramètres, **caractérisé en ce que**
le coefficient de correction est obtenu par pondération de la concentration de nombre de particules pour chaque taille dans le résultat de mesure de distribution de taille de particules avant correction en utilisant une valeur indiquant l'efficacité de comptage du compteur de particules de condensation (3) pour chaque taille correspondante, et sur la base d'une relation entre une concentration de nombre de particules intégrée obtenue par intégration de la concentration de nombre de particules pondérée respectivement et de la concentration de nombre de particules obtenue par le compteur de particules de condensation (3).

5. Appareil de mesure de distribution de taille de particules (4) selon la revendication 4, comprenant en outre une partie de calcul (43d) qui calcule le nombre, la superficie, le volume, ou la concentration de masse des particules en utilisant la distribution de taille de particules corrigée par la partie de correction (43c).

6. Système d'analyse de gaz (100) comprenant :

un compteur de particules de condensation (3) pour mesurer le nombre de particules contenues dans le gaz cible à mesurer ; et
l'appareil de mesure de distribution de taille de particules (4) selon la revendication 4 ou 5.

FIG.1

**42**                          **3**

```
┌─────────────────┐      ┌─────────────────────┐
│   ELECTROMETER  │      │    CONDENSATION     │
│                 │      │   PARTICLE COUNTER  │
└─────────────────┘      └─────────────────────┘
```

**43a**
```
┌──────────────────┐          ┌──────────────────┐
│  PARTICLE SIZE   │          │  RECEPTION PART  │   **43b**
│  DISTRIBUTION    │          │                  │
│ CALCULATING PART │          └──────────────────┘
└──────────────────┘
```

**43c**
```
┌──────────────────┐
│  CORRECTION PART │
└──────────────────┘
```

**43**
```
┌──────────────────┐
│    SECONDARY     │   **43d**
│   INFORMATION    │
│ CALCULATION PART │
└──────────────────┘
```

FIG.2

**EP 3 654 013 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005214931 A
- US 20130060509 A1

**Non-patent literature cited in the description**

- **A. WIEDENSOHLER et al.** Mobility particle size spectrometers: harmonization of technical standards and data structure to facilitate high quality long-term observations of atmospheric particle number size distributions. *Atmospheric measurement techniques,* 01 January 2020, vol. 5 (3), 657-685